(19)

(11) **EP 2 012 254 B1**

(12) **EUROPEAN PATENT SPECIFICATION**

(45) Date of publication and mention of the grant of the patent: **08.09.2010 Bulletin 2010/36**

(51) Int Cl.: ***G06K 9/00*** *(2006.01)* ***G06K 9/40*** *(2006.01)* ***G06K 9/62*** *(2006.01)*

(21) Application number: **07111917.6**

(22) Date of filing: **06.07.2007**

# (54) Method for quantifying an underlying property of a multitude of samples

Verfahren zur Quantifizierung einer zugrunde liegenden Eigenschaften einer Menge von Proben

Procédé de quantification d'une propriété inférieure pour plusieurs échantillons

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application: **07.01.2009 Bulletin 2009/02**

(73) Proprietor: **PerkinElmer Cellular Technologies Germany GmbH**
**22525 Hamburg (DE)**

(72) Inventor: **Kask, Peet**
**76901, Tabasalu (EE)**

(74) Representative: **von Kreisler Selting Werner**
**Deichmannhaus am Dom**
**Bahnhofsvorplatz 1**
**50667 Köln (DE)**

(56) References cited:
**EP-A- 1 484 595**
**WO-A-02/057997**
**WO-A-2006/063216**
**US-A- 6 151 405**
**US-A1- 2002 196 964**

- **RODENACKER K ET AL: "A feature set for cytometry on digitized microscopic images" ANALYTICAL CELLULAR PATHOLOGY, ELSEVIER SCIENCE, AMSTERDAM, NL, vol. 25, no. 1, 2003, pages 1-36, XP002342835 ISSN: 0921-8912**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention relates to a Method for quantifying an underlying property of a multitude of samples, particularly chemical and/or biological samples. Preferably the samples are analyzed by high through put screening whereby the analysis is preferably performed in the field of drug development.

## BACKGROUND

Drug development is most often based on fluorescence as a sensitive indicator of biochemical processes in samples. It is a current trend in drug development that the number of biochemical assays is in a decline and an increasing fraction of all assays are cellular ones. Therefore, there is a growing demand for the design of new assays and development of data analysis methods quantifying the equilibrium of the biochemical reaction of interest on basis of fluorescence images of cells. In particular, there is a demand for image analysis software that could be easily adjusted to the needs of each additional assay type and that could run on-line in a high throughput mode.

Usually, the analysis of images from cellular samples starts with recognition of cells and their segments, such as nucleus, cytoplasm and membrane. Algorithms for segmentation of images into objects and background, as well as recognition and classification of objects of interest based on e.g. their geometry or texture, are known in the art. In a typical assay setup different fluorophores are used to simultaneously image a reference channel and a signal channel. The signal channel is used to detect molecules characterizing the biological process of interest, e.g. a receptor protein located in the cell membrane. The reference channel is used to identify the location of different segments of the cell, e.g. the nucleus, cytoplasm, membrane or other organelles ("counterstaining"). Preferrably, the segmentation is carried out using the image from the reference channel, where the appearance of samples is largely independent of the biological process of interest. Sometimes it is useful to correct results of initial segmentation using image of the signal channel where two extreme states of samples look different. However, one should be careful in doing this because there is a danger of artifacts if recognition accuracy is different for different samples.

After recognition and segmentation, one may calculate a variety of measures of cells and their segments, such as mean intensity, area, roundness etc. The question remains how such measures are related to a biological process or processes of our interest. It is the aim of the present invention to provide an improved method for establishing this relationship, which avoids the shortcomings of the solutions known in the art.

In the state of the art, this question is most commonly answered by heuristic and subjective approaches. Using a priori knowledge about the biological process of interest, the developer of an assay chooses one or more measures and derives an estimate for the state of the underlying process of interest from these. A significant disadvantage of this method is that the subjective choice of quantifiers and of the mathematical relation used to derive the measure from them may induce a bias in the resulting measure. In addition, the resulting measure will typically not make best use of the available quantifiers to determine a measure of the underlying process with the best statistical accuracy, since only a single or a few quantifier combinations are considered during development of the assay and the subsequent analysis.

An alternate approach known in the art, Independent Component Analysis (ICA; Hyvärinen, A. 1999. Survey on Independent Component Analysis. Neural Computing Surveys, 2: 94-128, Hyvärinen, A. and E. Oja. 1997. A fast fixed-point algorithm for independent component analysis, Neural Computation, 9:1483-1492. Hyvärinen, A. and E. Oja. 2000. Independent component analysis: algorithms and applications. Neural Networks, 13:411-430), strives to quantify an underlying property characterising the biological process of interest through an objective mathematical method. A fundamental lesson given by ICA is that (under certain conditions) certain linear combinations of directly observable random measures that can be identified by searching extreme values of non-Gaussianity are not of accidental character but describe latent variables of certain physical meaning. A simple and very convincing example of ICA is its ease in solving the so-called cocktail party problem, or more generally, the blind source separation. Applied to the biological assays discussed here, ICA teaches that an underlying property characterizing the biological process of interest can be quantified by identifying such linear combinations of measures that show a significant non-Gaussian distribution. However, the ICA approach may suffer from several problems when applied to biological assay data: Specifically, outliers (i.e, data points which are significantly falsified by measurement errors) may cause a certain measure to exhibit a significant apparent non-Gaussian distribution, resulting in strong weighting of such measure, which may be largely or entirely spurious. Also, in many practical scenarios, the number of available data points from different samples is not sufficient to derive robust estimates for the optimal linear combinations.

It is the object of the present invention to provide_a robust and objective method for quantifying an underlying property of a multitude of samples.

This object is solved by a method according to claim 1. Preferred embodiments are particularly defined within the dependent claims.

The invention relates to a method for quantifying an underlying property of a multitude of samples, particularly biological and/or chemical samples of biological cells, tissues, substrates carrying biological molecules. Preferably the samples do include samples, which are analyzed for drug discovery. The analyses is particularly performed by high through put screening. The inventive method has the following steps:

- providing a multitude of samples, each sample characterised by said underlying property, comprising at least two different groups of control samples, whereby the underlying property is known to be of identical value within each control group,

- taking at least one image of each sample,

- performing image analysis of said images to obtain at least two measures for each sample, whereby said measures are expected to have a linear relation to the underlying property and to be affected by a scalor multiplicative noise factor,

- determining coefficients of a first linear combination of said measures, satisfying the conditions

  o for each of the control groups, the expected value of the first linear combination equals a first predefined non-null constant and

  o for all or a subset of the samples, the variance of said first linear combination is minimised

- deriving normalised measures by dividing each measure for each sample by said first linear combination of said measures for said sample, and

- quantifying the underlying property for all or a subset of the samples using one or more of the normalised measures.

The benefit of the method according to the invention lies in the fact that normalised measures are provided which typically exhibit a significantly lower noise than the original measures obtained from the images. Hence, experimental results - namely the underlying property of interest - can be obtained with increased precision. By including two groups of control samples, and applying a boundary condition to the first linear combination, based on the value of the linear combination for said control groups as detailed above, the inventive method avoids any systematic distortions of the normalised measures.

According to the invention, at least two kind of control samples are used. Preferably, the two kind of control samples represent two extreme states of the underlying property. For example, in drug screening, positive and negative control samples are well-known that correspond to induced and non-induced activation of a biological process. Using control samples representing widely different, preferably extreme states of the underlying property leads toward a robust determination of the first linear combination, providing reliable results even from limited or noisy data sets.

Preferably, data from the two control sample groups are used in the noise minimization step. While other subsets of the samples may be used instead or in addition, use of the control sample groups guides towards a unique, reasonable and representative solution. Otherwise, strongly unequal number of data units from different kind of samples may result in biased solutions.

Preferably, the boundary conditions required for the first linear combination according to the invention, as stated above, are converted into a set of linear mathematical equations. Solving a set of linear equations is a well-posed mathematical problem that is solved very fast (without iterations) by methods known in the art, yielding a single solution that is also very stable.

Preferably, the underlying property is quantified by a second linear combination of normalized measures (that are original measures divided by said first linear combination). According to the invention, this second linear combination should be preferably chosen such that

- for two of the control groups, the expected value of the second linear combination differs by a second predefined constant and
- for all or a subset of the samples, the noise of said second linear combination is reduced, preferably minimised.

While the second condition teaches to select a linear combination that allows quantification of the underlying property with minimum noise, the first condition ensures that the signal, i.e, the information about the variation of the underlying property within the set of samples, is fixed to a constant. Preferably, in accordance with a convention established in the art, one of the control samples given value 0.0 and the other is given value 1.0.

The benefit of this preferred embodiment of the invention is a further reduction of noise, and hence increase in precision, in the determination of the underlying property of interest. In practice, image analysis often allows the determination of multiple measures, which may depend on the underlying property in varying degree, from each image. The invention teaches how to make best use of the information contained in these measures, by combining the measures in a second combination as detailed above.

It should be noted, however, that usually the step of determining normalized measures from the original ones already returns normalized variables with drastically reduced noise, compared to original variables. Instead of determining the best (second) linear combination of normalized measures, one may be satisfied with selecting the least noisy normalized measure as the quantifier of the underlying property.

## BRIEF DESCRIPTION OF THE DRAWINGS

Fig. 1 shows images of cells undergoing the Akt3/PKBγ Redistribution® assay from BioImage (ThermoFisher Scientific).

Fig. 2 shows images of cells undergoing the Endothelin A receptor ($ET_A$-receptor) internalization assay.

Fig. 3 shows images of cells undergoing the Transfluor assay from Molecular Devices Inc.

Fig.4 shows a plot of outer-cytoplasm intensity versus membrane intensity for a set of Akt3 samples.

Fig. 5 shows a plot of mean intensities in different segments of cells versus an estimate of the process coordinate for a set of Akt3 samples.

Fig. 6 shows original and corrected membrane intensity of cells from positive control samples and negative control samples of the Akt3 assay.

Fig. 7 shows original (left) and filtered (right) images of the signal channel from the Akt3 assay.

Fig. 8 shows a plot of membrane intensity of the filtered image versus membrane intensity of the original image for Akt3 samples.

Fig. 9 shows intensities of three different segments of cells derived from original (upper graphs) and filtered images (lower graphs) of the Akt3 assay as functions of the estimated process coordinate,

Fig. 10 shows intensity profiles of cells of eight positive (circles) and eight negative control samples (triangles) of the Akt3 assay. The upper figure corresponds to the original image while the lower one stands for the filtered image.

Fig. 11 shows segments of cells derived from an image of a negative control sample of Akt3 via automated image analysis.

Fig. 12 shows cell-wise plots of mean intensities of three segments of cells in the Akt3 assay.

Fig. 13 shows the data of Fig. 12 after outlier-filtering and correction for scalar noise.

Fig. 14 shows the estimator of the process coordinate derived from the data of Fig. 13.

Fig. 15 shows a dose response curve for the Akt3 assay.

Fig. 16 shows intensity profiles of cells of eight positive (circles) and eight negative control samples (triangles) of the $ET_A$-receptor internalization assay.

Fig. 17 shows the nucleus and three segments of the cytoplasm derived from an image of a positive control sample of $ET_A$-receptor internalization assay.

Fig. 18 shows cell-wise plots of the mean intensities of four segments of cells in the $ET_A$-receptor internalization assay.

Fig. 19 shows the data of Fig. 18 after outlier-filtering and correction for scalar noise.

Fig. 20 shows the cell-wise estimator of the process coordinate calculated from the data of Fig. 19.

Fig. 21 shows the well-wise estimator of the process coordinate of the $ET_A$-Receptor Internalization assay, derived by averaging the cell-wise data of Fig. 20 over a given well.

Fig. 22 shows intensity profiles of cells of eight positive (circles) and eight negative control samples (triangles) of the Transfluor assay. The upper two graphs (filled circles and triangles) correspond to the original image; the lower two graphs (empty circles and triangles) to the filtered image.

Fig. 23 shows the nucleus and two segments of the cytoplasm derived from an image of a positive control sample of the Transfluor assay.

Fig. 24 shows the intensities of three different segments of cells of the original (left) and filtered (right) images from positive and negative control samples of the Transfluor assay.

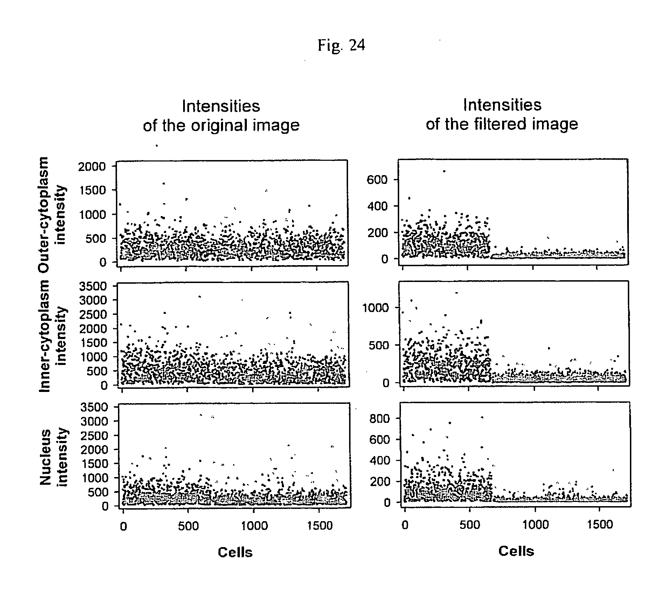

Fig, 25 shows the data of Fig. 24 after outlier-filtering and correction for scalar noise,

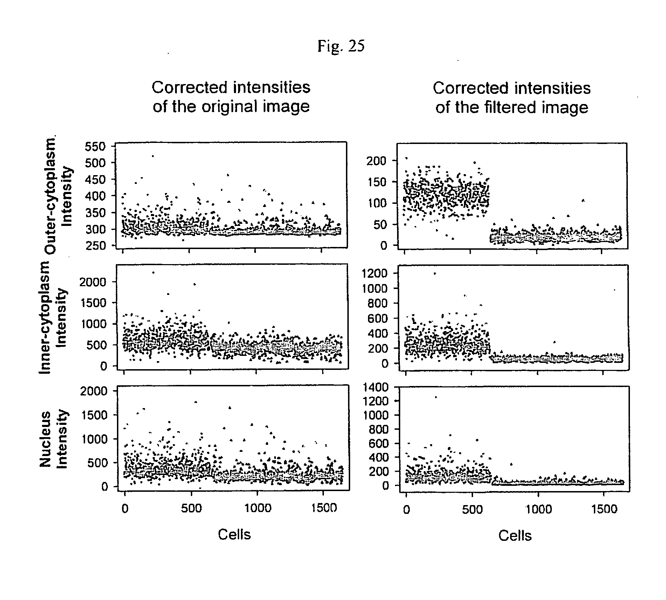

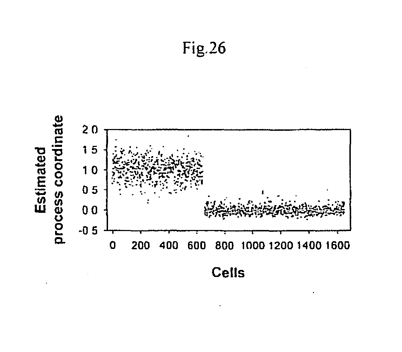

Fig. 26 shows the cell-wise estimator of the process coordinate calculated from the data of Fig. 25.

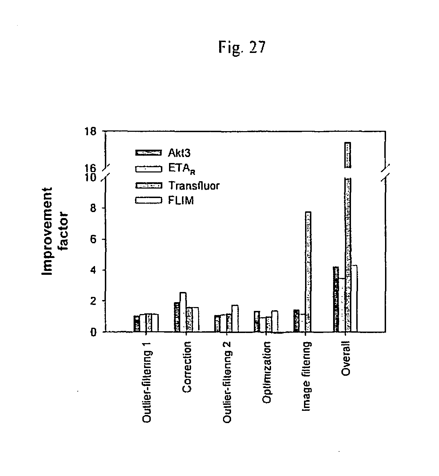

Fig. 27 shows factors of improvement of the signal-to-noise ratio obtained by different analysis steps.

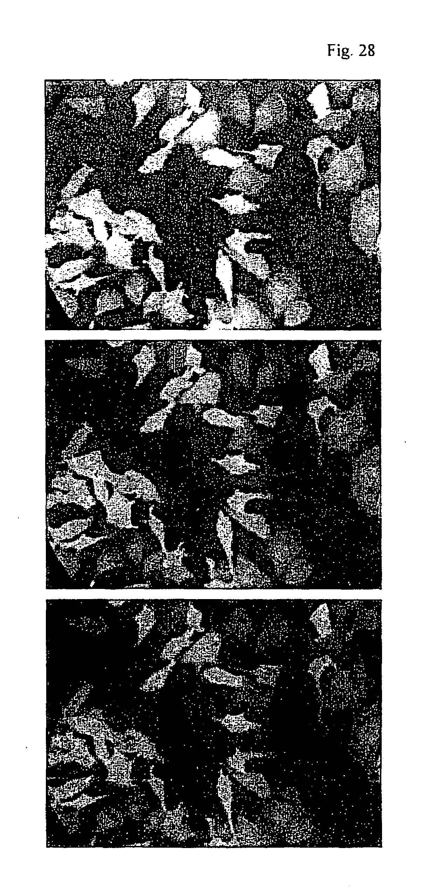

Fig. 28 shows images of a cellular sample in a fluorescence lifetime measurement, obtained at three different settings of delay time between fluorescence excitation and observation.

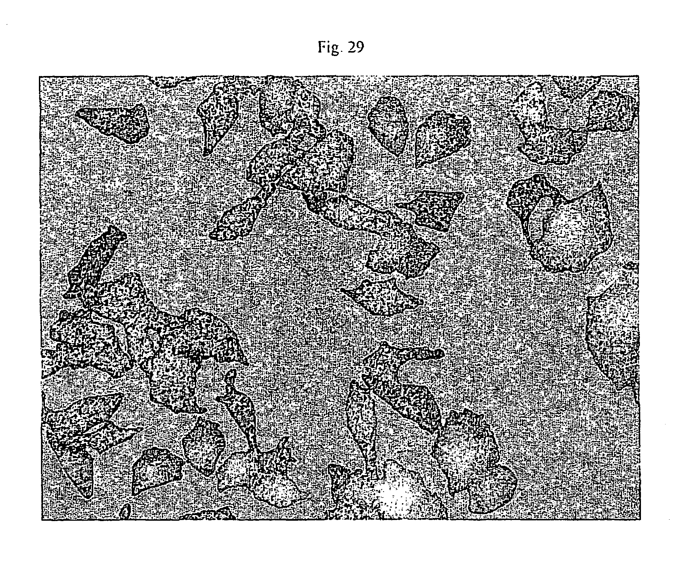

Fig. 29 shows a reference image obtained as a linear combination of the original images presented in Fig. 28.

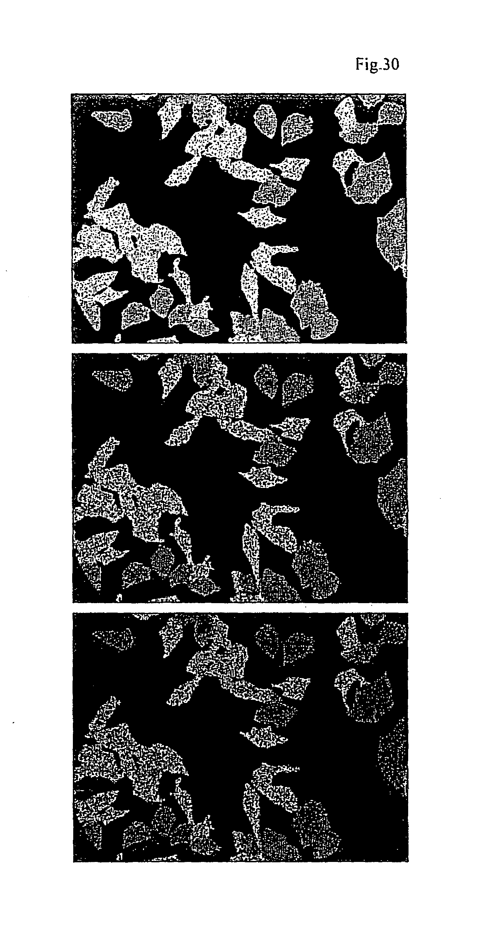

Fig. 30 shows the same images of Fig. 28 after correction against scalar noise.

Fig, 31 shows optimized linear combinations of images measured at four different settings of delay time between fluorescence excitation and observation, for three different samples. (Upper image-positive control sample; middle image - negative control sample; lower image - sample with both kinds of cells,)

## THEORY

### Overview

The basic interest that led to the invention is particularly to quantify a biochemical process that causes redistribution of fluorescence intensities on images. The quantification is based on measures which are mean pixel intensities of segments of cells. Then, a linear combination of these measures is calculated that best describes cell-to-cell fluctuations of fluorescence intensity for the full set of samples. This is used as a reference signal for correcting the original measures. Thereafter, a linear combination of corrected measures is identified that is an estimator of the underlying property of the biochemical process, z.

### Linear model

First we assume that the process can be described by a single underlying property, i. e. a process coordinate on which expected intensities of various segments of cells depend. In particular, we assume that the coordinate of the process can be defined so that all intensities are linear functions of the coordinate. Thus, we reach at a model with a certain linear relationship between intensities of segments of cells (that are directly measurable variables) and the coordinate of the process that is a typical latent variable.

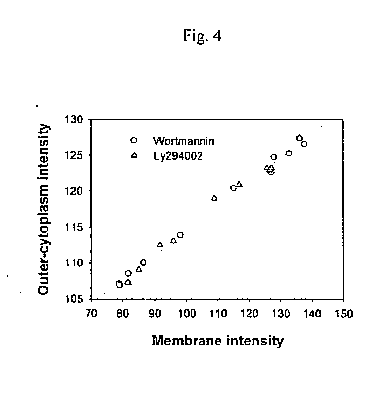

There are at least two reasons why we introduce the linear model. From one side, we have empirically verified that in a series of translocation assays, intensities in different segments of cells have a linear inter-relationship. This is exemplified in Fig. 4, a plot of outer-cytoplasm intensity versus membrane intensity for a set of Akt3 samples containing different doses of wortmannin or ly294002. Each data point represents approximately 2000 cells from four identical samples. The linear relationship is apparent from the graph.

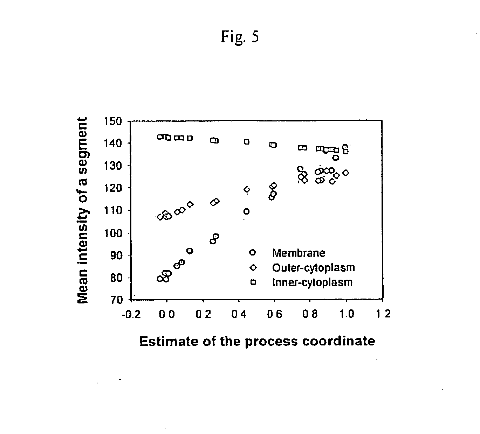

Secondly, this significantly simplifies the analysis if the input and output variables have a linear relationship. A number of methods of statistical analysis are known for identification of latent variables (Principal Component Analysis, Factor Analysis, Independent Component Analysis); they all work best with a linear model. Therefore, we are careful with not including any such variables into the set that would destroy their linear inter-relationship.
As another demonstration of the linear inter-relationship between variables, in Fig. 5 mean intensities of three different segments of cells are plotted for different samples of the same assay (at different doses of the compound inducing the translocation process) versus the output variable of our analysis interpreted as the process coordinate.

Algebraic representation of the relationship demonstrated by Fig. 5 is as follows,

$$\langle \mathbf{x} \rangle_z = \mathbf{a} + \mathbf{b}z \; . \tag{1}$$

Here, **x** is a feature vector of samples (in our particular case: intensities in different segments of cells); z is the process coordinate (measuring how much fluorescent material has been transformed from one state to the other); **a** and **b** represent parameters of a set of linear functions of z (each representing intensity of a cell segment), By brackets **<x>,** we have denoted the expected value of the feature vector x at a given value of the process coordinate z. Here and below, vectors are denoted by bold characters while scalar variables are denoted by italic characters.

### Correction for scalar noise

Measured intensities of segments of individual cells are different from the corresponding expectations. We consider the difference as a noise term $\alpha$ :

$$\mathbf{x} = (\mathbf{a} + \mathbf{b}z + \boldsymbol{\alpha}) . \tag{2}$$

Typically, the original measures of intensities of segments of individual cells are very noisy. It is an empirical finding that the ratio of intensities of two segments is a less noisy variable than original intensities. However, we do not like to divide intensity of a section by intensity of another one because the outcome would be a non-linear function of *z*, Rather, we shall correct original intensities by dividing them by such linear combination of intensities of segments that is constant in z.

In our mathematical model we distinguish two different kind of noise, replacing Eq. 2 by the following one,

$$\mathbf{x} = (\mathbf{a} + \mathbf{b}z + \boldsymbol{\alpha})(1 + \varphi) \tag{3}$$

Here, (1+$\varphi$) is scalar noise factor standing for fluctuations in overall intensity of individual cells. $\alpha$ is a noise vector that is not correlated with $\varphi$. Expectations of both $\alpha$ and $\varphi$ are zero.

For a given pair of components of **x**, a single linear combination can be identified that is independent of *z* and has unit expectation value. For more than two components, a continuum of linear combinations exists satisfying such conditions. We will select the one having minimal noise. A linear combination of the components of **x** can be written as (**w**,**x**). Under the constraint <(**w, x**)> = 1, noise of the linear combination can be expressed as

$$\begin{aligned}(\mathbf{w}, [\mathbf{x} - \langle \mathbf{x} \rangle]) &= (\mathbf{w}, \mathbf{x}) - 1 \\ &= (1 + \varphi)(\mathbf{w}, \boldsymbol{\alpha}) + \varphi\end{aligned} \tag{4}$$

The condition of minimization of the variance of noise of the linear combination can be written as follows,

$$\begin{aligned}\min_w \left\langle \left(\mathbf{w}, \left[\mathbf{x} - \langle \mathbf{x} \rangle\right]\right)^2 \right\rangle &= \min_w \left\langle \left[(1+\varphi)(\mathbf{w}, \boldsymbol{\alpha}) + \varphi\right]^2 \right\rangle \\ &= \min_w \left\langle (1+\varphi)^2 (\mathbf{w}, \boldsymbol{\alpha})^2 + \varphi^2 \right\rangle \\ &= \min_w \left\langle (\mathbf{w}, \boldsymbol{\alpha})^2 \right\rangle \end{aligned} \quad (5)$$

In words, minimization of noise of the linear combination is equivalent to minimization of the contribution from the $\alpha$-term while $\varphi$-noise is not influenced. The outcome of the minimization is the best estimate of the scalar noise factor $(1+\varphi)$ among linear combinations of original variables.
A logical step after identifying the best estimate of the scalar noise factor is dividing original variables by such estimate,

$$\mathbf{x}' = \frac{\mathbf{x}}{(\mathbf{w}, \mathbf{x})} \quad (6)$$

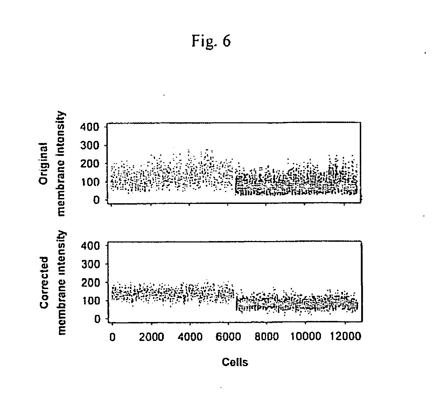

After that step, we have corrected our data so that the factors $(1+\varphi)$ in Eq. 3 are cancelled. Corrected variables have a lower noise level than noise level of the original variables. A typical example of the effect of correction against the scalar noise is presented on Fig. 6, which shows original and corrected membrane intensity of cells from positive control samples (left) and negative control samples (right) of the Akt3 assay. Noise level is reduced by a factor of 2.0 in this example. In other examples that we have studied, noise level has been reduced by a factor of 1.6 to 2.5.
Noise reduction is not the only consequence of the data correction step. We have to remember in the next step that the corrected intensities have a precise linear inter-dependency even though the uncorrected variables lack that property due to noise in measured variables.

**Estimation of the process coordinate**

The task of the next step (after the correction for scalar noise) is expressing the estimate of underlying property z. According to our model, all corrected intensities are linear functions of z. They comprise an infinite number of estimators of *z*, However, different estimators have different signal and noise level. We search for a linear combination of corrected intensities, **(u,x')** having the best signal to noise ratio.

**Mathematics of noise minimization with constraints**

We assume we have measured mean intensities of a set of segments from a high number of cells of two significantly different types of samples (positive and negative controls). The task is to determine two sets of linear coefficients: the first set for correcting data against scalar noise, and the second one for evaluating the process coordinate.
Both tasks are solved by constructing a set of n linear equations for determining n unknown coefficients **w** (or **u**). There are two constraint equations in both cases,

$$\left.\begin{aligned} \langle (\mathbf{w}, \mathbf{x}) \rangle_{NC} &= 1 \\ \langle (\mathbf{w}, \mathbf{x}) \rangle_{PC} &= 1 \end{aligned}\right\} \quad (7)$$

for the estimate of the scalar noise factor, and

$$\left.\begin{aligned} \langle (\mathbf{u}, \mathbf{x}') \rangle_{NC} &= 0 \\ \langle (\mathbf{u}, \mathbf{x}') \rangle_{PC} &= 1 \end{aligned}\right\} \quad (8)$$

for the estimate of the process coordinate. PC and *NC* denote positive and negative control samples, respectively. Brackets denote ensemble average. In fact, the two constants on the right-hand side of Eq. 8 are arbitrary different constants; zero and unity have been selected as a convention.

The remaining (*n*-2) equations are derived from the condition of noise minimization; in the first case it is

$$\min\left\{\left\langle\left((\mathbf{w},\mathbf{x})-1\right)^2\right\rangle_{PC}+\left\langle(\mathbf{w},\mathbf{x})^2\right\rangle_{NC}\right\} \quad (9)$$

In the second case it is

$$\min\left\{\left\langle\left((\mathbf{u},\mathbf{x}')-1\right)^2\right\rangle_{PC}+\left\langle(\mathbf{u},\mathbf{x}')^2\right\rangle_{NC}\right\} \quad (10)$$

Due to the two constraints, the minimum is searched in a subspace of a lower dimension than the space of variables. At the end we get as many linear equations as there are unknown coefficients. A set of linear equations is a relatively easy mathematical problem yielding a single set of wanted linear coefficients **w** (or **u**).

### Filtered images

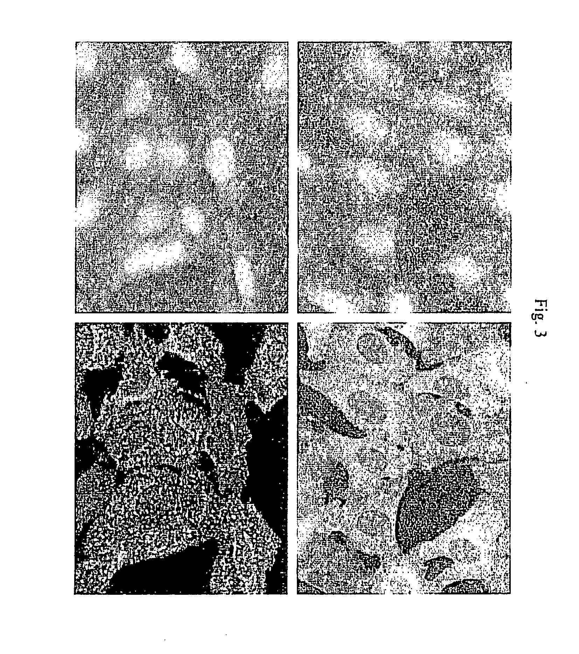

So far we have silently assumed that mean measured intensities of different segments of cells calculated from the original images are input variables of the analysis. However, when using only average intensity, information about possibly uneven spatial distribution of the intensity is lost. The lost part of information may be very informative, in particular if positive and negative control samples differ by the texture of the image rather than by the mean intensity in a given segment of cell. A clear example of such case is Transfluor assay, a cell-based fluorescence assay from Molecular Devices used to screen for drugs that regulate G protein-coupled receptors (GPCRs). Fig. 3 shows example images from this assay as follows: Left images - reference channel; right images - signal channel; upper images - negative control samples; lower images - positive control samples. In positive control samples, fluorescence material is concentrated into small spots, while in negative control samples it is a rather flat function of coordinates. At the same time, mean intensity in segments of cells is not significantly different for positive and negative control samples.

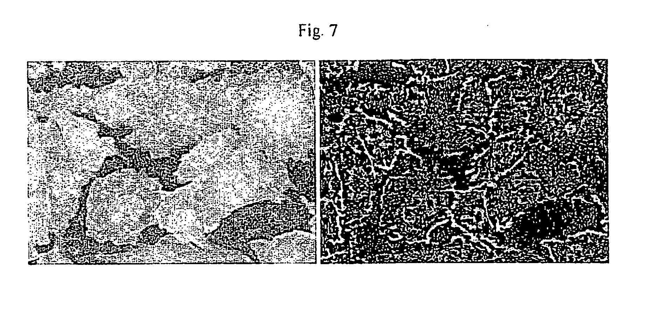

Here we offer the following approach. One may apply specific filters to original images in order to keep information that would otherwise be lost. Mean intensities calculated from cell segments of a filtered image serve as additional to original variables. For example, one may detect spots in the first step and plot the difference between intensities of spot pixels and the surrounding in the second step, yielding a new image with only spots; see Fig. 7 (left - original images; right - filtered images of the signal channel from the Akt3 assay).

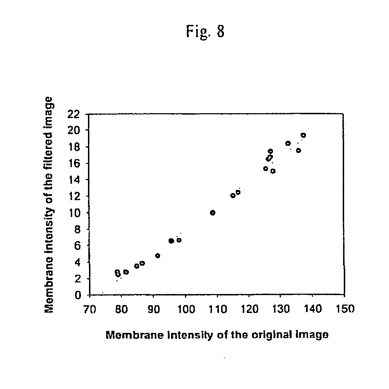

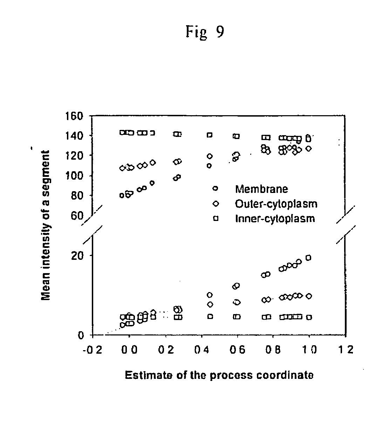

A fundamental concern is to ensure that expected intensities of segments from the filtered image are linear functions of the process coordinate. Filters may yield non-linear distortions. This is exemplified in Fig. 8, which shows the membrane intensity of the filtered image plotted against the membrane intensity of the original image in Akt3 assay results. Each data point corresponds to approximately 2000 cells from four identical samples at a given concentration of wortmannin or ly294002. The dependency is slightly non-linear. With such images, the linear model is correct only in a certain approximation. Fig. 9 shows the intensities of three different segments of the original (upper graphs) and filtered images (lower graphs) of Akt3 assay as functions of the estimated process coordinate. It is apparent that the linear model still yields reasonable results, despite the minor non-linearity introduced by the filtering step.

## EXAMPLES

### Equipment

All example assays have been performed using the Opera™ high throughput confocal imaging plate reader (Evotec Technologies, Hamburg). Confocal images on the Opera are created using Nipkow disc technology. The instrument is equipped by four lasers, a Xenon lamp (for non-confocal ultraviolet) and four CCD cameras enabling parallel multi-color image acquisition. The instrument is routinely used in primary, secondary and other screening campaigns. The Opera is specially designed as high speed instrument with high resolution.

**Software**

We have used a software package Acapella™ that was originally developed for Opera equipment, but has gradually evolved as stand-alone software. It is a script-based language with a large number of modules and script procedures that support image analysis and other calculation tasks for a great number of screening samples without intervention by the user. Furthermore, user interfaces and high-level scripting support a convenient and flexible adaptation of the algorithm to the needs of new assay types. There has been a permanent requirement to new software products making on-line data analysis in high-throughput mode possible. In fact, in all examples described here, the most time-consuming part of data analysis is cell recognition and segmentation, i.e. the approach here does not practically extend the calculation time.

**Example 1: Akt3 assay**

The Akt3/PKBy Redistribution® assay from BioImage (http://www.bioimage.com) monitors translocation of GFP-human Akt3 fusion protein from the cytoplasm to the plasma membrane. Insulin-like growth factar-I (IGF-I) is used as reference agonist, and compounds are assayed for their ability to inhibit TGF-I-stimulated membrane translocation of Akt3/PKBγ. In inhibited cells, fluorescence is quite evenly distributed in the cytoplasmic space. In activated cells, there are spots of high intensity on the membrane area.

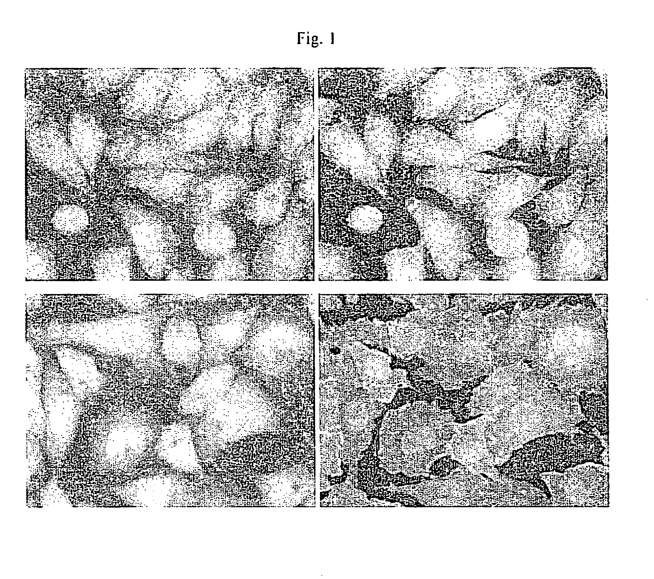

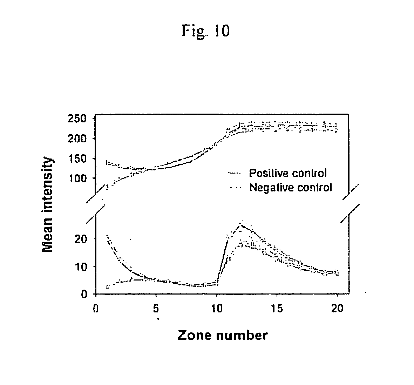

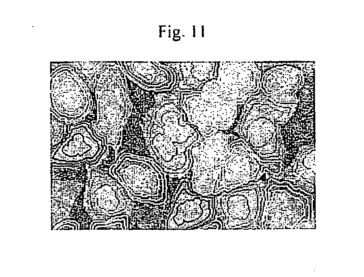

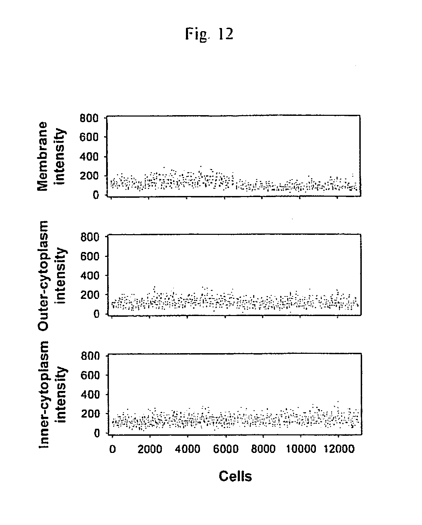

Exemplary images from negative and positive control samples are presented on Fig. 1. (Left images - reference channel; right images - signal channel; upper images - negative control samples; lower images - positive control samples. Negative control samples means those with no translocation while in positive control samples translocation has occurred.) Reference images are not best suited for nucleus detection; therefore we have used signal channel images as an aid to correct nucleus recognition. The steps of nucleus recognition, cytoplasm recognition and segmentation are done using standard object detection libraries of Acapella™; they are not described here in detail. Thereafter we measure the averaged radial intensity profile of cells for the two extreme states of samples. To this end, the cytoplasmic area including the membrane is divided into ten zones (zone numbers 1 to 10 starting from outside) and the nucleus has also ten zones (zone numbers 11 to 20). Each zone has a certain interval of relative radial distances to the nucleus center and to the nucleus surface (for the nucleus part) or to the nucleus surface and to the cell surface (for the cytoplasm part). The measured profiles for a series of positive and negative control samples are presented on Fig. 10. Intensity profile of cells of eight positive (circles) and eight negative control samples (triangles) of the Akt3 assay are shown. The upper figure corresponds to the original image while the lower one stands for the filtered image. The measured profiles aid us in deciding how many segments we create and where their borders are. In the particular case of Akt3 assay, we have decided to divide the cell into a membrane area (zone 1 and a half of zone 2 of Fig. 10), two segments of cytoplasm (outer cytoplasm -- the other half of zone 2 and zone 3; inner cytoplasm -- zones 4 to 10) and a segment representing the nucleus (zones 11 to 20). In fact, we have discovered that it makes little sense to include the nucleus part in further analysis. Thus, our further analysis is based on intensities of three segments, the membrane and two segments of cytoplasm. Fig. 11 illustrates the results of segmentation in terms of border lines between the three different segments of our choice. On Fig. 12, mean intensities of the three segments are plotted as read out parameters from images of positive control samples (left) and negative control samples (right).

An intermediate step after segmentation and before linear combination analysis is outlier filtering. Typically, for a great majority of cells of a single sample, intensities in different segments have a Gaussian-like distribution. (In fact, the distributions are asymmetric; it is more appropriate to say that the logarithms of intensities are more or less Gaussian-distributed.) However, there is always a small fraction of cells that are atypical; we filter them out. The fraction of outfiltered cells is typically four or five percent.

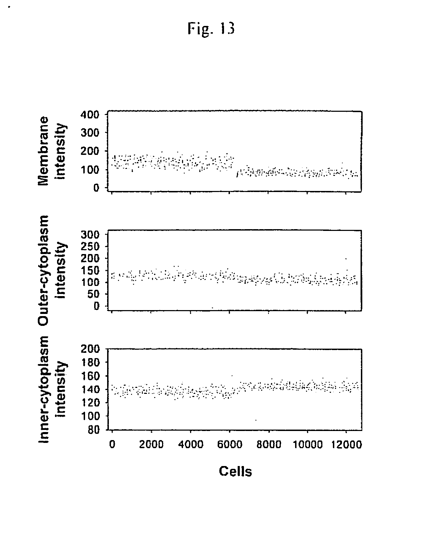

The next step of analysis may be called correction for the scalar noise factor. For each cell we determine the factor by which all original intensities are divided. This is what we call the reference signal. It is a linear combination of original intensities determined from the condition given in Eq. 4. Coefficients of the linear combination that are returned when identifying the reference signal are presented in Table 1. On Fig. 13, the corrected mean intensities are plotted, after outlier-filtering and correction for the scalar noise factor. Compared to data of Fig. 12, 3.3 % of all cells have been removed by outlier-filtering. It is apparent from visual inspection of Fig. 12 and 13 that the correction significantly reduces noise.

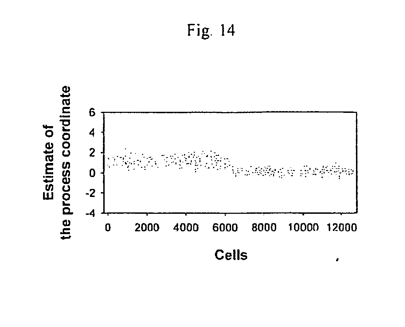

Finally, the linear combination of corrected intensities determined by optimizing the signal-to-noise ratio is plotted on Fig. 14. We have noticed that it is useful to optimize coefficients of the linear combination on basis of intensities of cell segments averaged over all cells of a whole image or from a fraction of an image, rather than on basis of individual cells. It is not simple to find out in what details image-to-image fluctuations differ from cell-to-cell fluctuations, but there is a difference in the outcome depending on whether the optimization is applied on cellular data or image-averaged data. Sample-to-sample fluctuations turn out to be better compensated when optimization is based on group-averaged data.

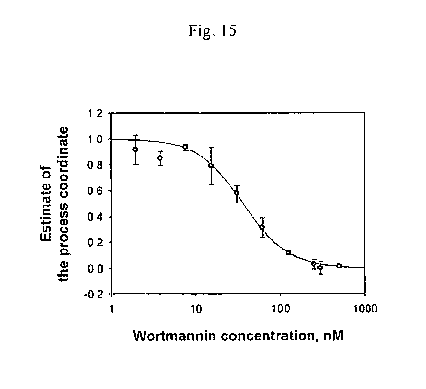

Data from a dose response experiment with varying concentration of wortmannin have been fitted yielding the dose value that induces 50 percent of the maximal changes, see Fig. 15. To fit the measured estimates of the underlying process property, a two-parameter formula has been used, $y = \frac{(a/x)^b}{1+(a/x)^b}$. Wortmannin concentration causing 50 % changes is $a = 36.4 \pm 3.0$ nM.

### Example 2: Endothelin A Receptor ($ET_AR$) Internalization Assay

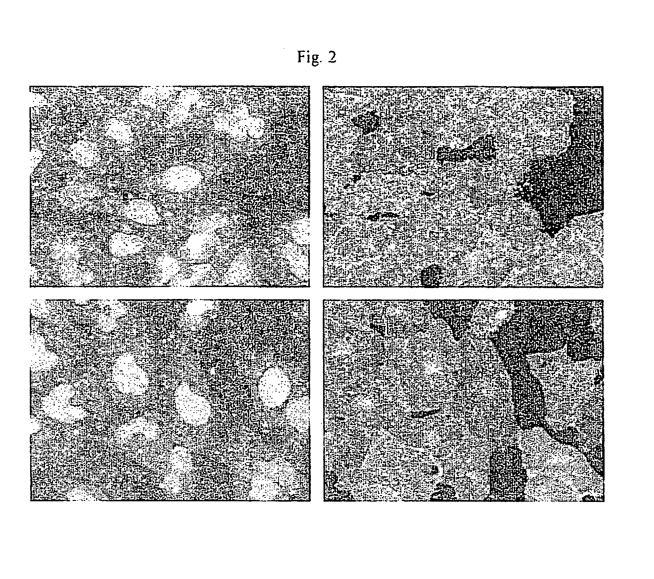

The $ET_AR$ assay is a typical example for a cell-based high-content assay. The biologically reversible process of an agonist-induced internalization of a membrane-localized G protein-coupled receptor (GPCR) is visualized by an autofluorescent protein tag fused to it. The receptor stimulation results in a redistribution of fluorescence from the membrane into endosomes located near the nucleus in the cell, Fig. 2 shows exemplary image data (left images - reference channel; right images - signal channel; upper images - negative control samples; lower images - positive control samples). Unstimulated cells show membrane-bound fluorescence while upon agonist stimulation the tagged G protein-coupled receptor (GPCR) is internalized into endosomes which are located near nucleus,

The design of the $ET_A$-receptor internalization assay allows the monitoring of the receptor's translocation due to the activation by ET-1. Thus, a screening campaign would be able to identify compounds that affect or cause the internalization of this receptor. Endothelin 1 (ET-1) is a peptide involved in the pathophysiology of different malignancies and therefore a potential therapeutic target. The vasoconstrictory and proliferative effects of ET-1 are primarily mediated by the $ET_A$-receptor.

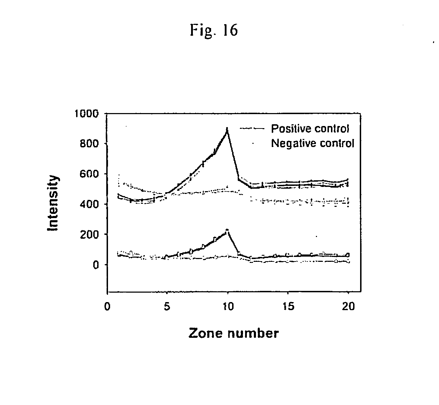

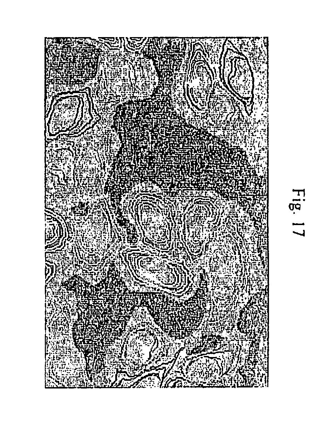

Radial intensity profiles measured for $ET_A$-receptor internalization assay are presented in Fig. 16. Intensity profile of cells of eight positive (circles) and eight negative control samples (triangles) are shown. The upper two graphs (filled circles and triangles) correspond to the original image while the lower ones (empty circles and triangles) stand for the filtered image. Cytoplasmic area including the membrane is divided into ten zones (zone numbers 1 to 10 starting from outside) while the nucleus has also ten zones (zone numbers 11 to 20). Each zone has a certain interval of relative radial distances to the nucleus center and to the nucleus surface (for the nucleus part) or to the nucleus surface and to the cell surface (for the cytoplasm part). On basis of the profiles, we have decided to divide each cell into four segments: nucleus and three different segments of cytoplasm, see Fig. 17. There are twelve positive control and twenty-four negative control wells. From each well, five images at different positions have been acquired.

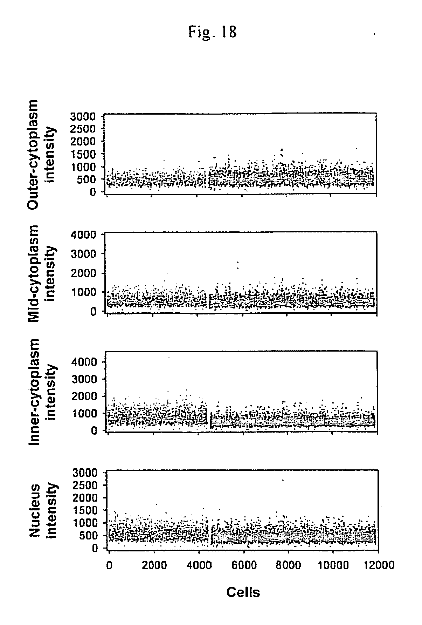

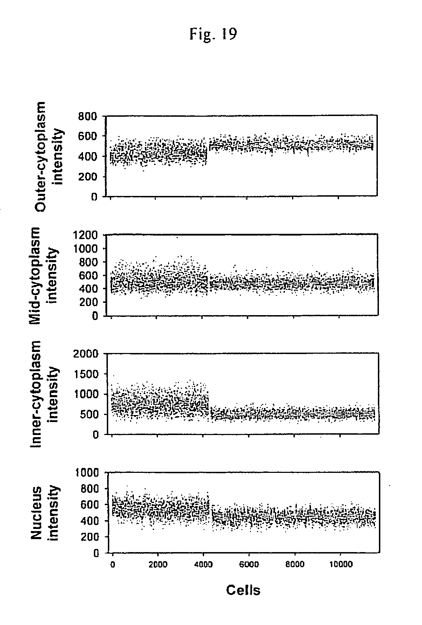

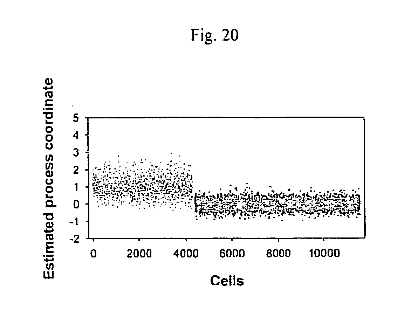

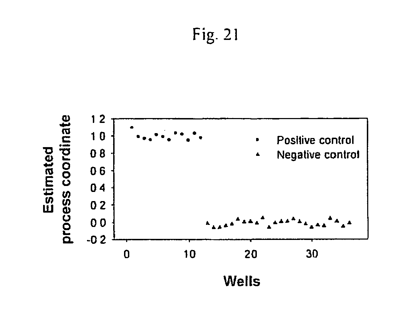

In Fig. 18, original intensities of the four segments are graphed for each analysed cell (left - positive controls; right - negative controls). In Fig. 19, intensities corrected by outlier-filtering and correction for the scalar noise factor are graphed in the same way. In Fig. 20, the estimate for the underlying process property obtained by an optimized linear combination of the corrected intensities of Fig. 19 is graphed. This optimized linear combination of corrected intensities was then averaged over cells of each well; the result is presented in Fig. 21.

### Example 3: Transfluor assay

Transfluor is a cell-based fluorescence assay technology from Molecular Devices (http://www.moleculardevices.com) used to screen for G protein-coupled receptors (GPCRs) ligands and other potential drugs that regulate GPCRs. The technology is based on the discovery that, upon activation by ligand binding, virtually all GPCRs rapidly undergo deactivation or "desensitization" by a common pathway. An early step in this pathway is the binding of the cytoplasmic protein beta-arrestin to the activated receptor. Beta-arrestin binding deactivates the GPCR signalling and triggers the translocation of the receptor into the cell where the ligand is removed and the receptor is recycled back to the cell membrane. When a GFP-beta-arrestin fusion protein is expressed within the cytoplasm, activation of the receptor induces, within seconds, a mass movement of the fluorescence to the cell membrane, and within minutes to clathrin-coated pits and endosomes. By this, the Transfluor technology monitors receptor activation by detecting movement of beta-arrestin-GFP in the cell,

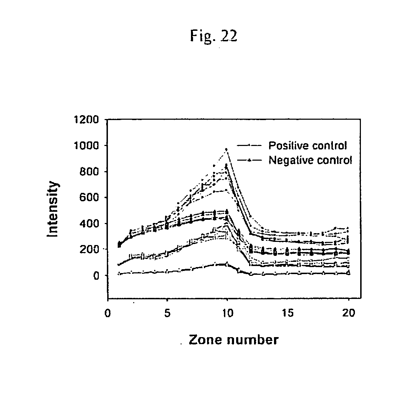

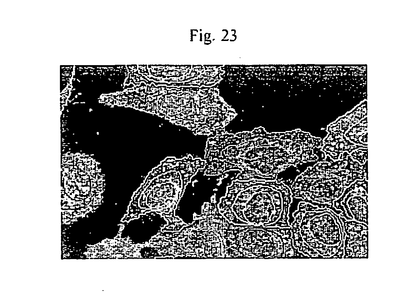

Fig. 3 shows exemplary image data (left images - reference channel; right images - signal channel; upper images - negative control samples; lower images - positive control samples). The Transfluor assay provides a clear example of drastic changes in images. In one extreme, fluorescent material has a rather homogeneous distribution within the cytoplasm. On the other end, fluorescent material is concentrated to a number of spots each representing a vesicle. Intensity profiles for original and filtered images of the Transfluor assay are presented on Fig. 22. Intensity profile of cells of eight positive (circles) and eight negative control samples (triangles) of the Transfluor assay are shown. The upper two graphs (filled circles and triangles) correspond to the original image while the lower ones (empty circles and triangles) stand for the filtered image. Cytoplasmic area including the membrane is divided into ten zones (zone numbers 1 to 10 starting from outside), and the nucleus has also ten zones (zone numbers 11 to 20). Each zone has a certain interval of relative radial distances to the nucleus center and to the nucleus surface (for the nucleus part) or to the nucleus surface and to the cell surface (for the cytoplasm part). After image filtering, positive and negative control samples are better distinguished by their profile compared to the original image. We have divided each cell into three segments. There are two segments for cytoplasm, and a segment of nucleus -- the result of segmentation is illustrated on Fig. 23.

After segmentation, mean intensities in various segments are tabulated, for each cell of each well. The set of measured intensities is graphically represented in Fig. 24 (left - positive controls; right - negative controls). In Fig. 25, intensities corrected by outlier-filtering and correction for the scalar noise factor are graphed in the same way, In Fig. 26, the estimate for the underlying process property obtained by an optimized linear combination of the corrected intensities of Fig. 25 is graphed.

**Example 4: Statistical accuracy and day-to-day reproducibility of linear coefficients**

These are practical questions how accurate a determined set of linear coefficients are, what accuracy is in fact needed, how a necessary accuracy is achieved and in what extent coefficients that are considered good for one data set are appropriate for another data set.

Statistical accuracy of estimated coefficients can in principle be studied theoretically but we have not developed a quantitative theory. Statistical accuracy of estimated linear coefficients can also be studied on basis of real data, e.g. by dividing a set of samples (cells or images) into a high number of more or less identical subsets, determining coefficients on their basis and studying the extent of scattering of the results. Here we have run a few test studies with the following observations. First, it indeed makes sense to remove outliers from input data before analysis because even a single strong outlier may significantly deteriorate the results. Secondly, statistical accuracy of determined coefficients depends on the number of variables and true values of respective coefficients. The situation is similar to a fitting problem where the accuracy significantly depends on the number of fit parameters. A problem with a lower number of unknown parameters is simpler and their values are better reproducible compared to a similar problem with a higher number of unknown parameters. (This is in fact a reason why we have used three or four segments in linear combination analysis instead of twenty zones that have been used in calculations of the intensity profile.) Thirdly, the accuracy of coefficients in a given problem depends on the number of repetitions, i.e. samples. According to a general rule in mathematical statistics, with increasing the number of repetitions by a factor, statistical errors decrease by square root of that factor. In our case, it is not important whether a unit of input data is a cell or an image, it is important that the number of units (cells or images) is large. What number is large enough may depend on problem. In cases that we have studied, numbers below 100 are often not large enough, yielding a significant reduction in the quality of the output linear combination. We stress here that the quality of the output linear combination should be evaluated on basis of other data than the data used for determining linear coefficients.

Applicability of linear coefficients to data sets of another day or equipment is a separate issue. We have used four data sets of a single assay but measured on different preparations on different dates. Coefficient values determined from different data sets may easily differ by a factor of two. Nevertheless, the sets of coefficients of a "wrong" day yield rather good results, characterized by the signal to noise ratio of 96 to 99 percent compared to the "correct" day.

In Fig. 27, the improvement factor of the signal-to-noise ratio obtained in different steps of analysis is plotted. One can see that correction for the scalar noise factor is a step that always yields a significant improvement. Image filtering may have a drastic effect in some cases, in particular for Transfluor assay. Against our original expectations, optimization of the linear coefficients in the estimate of the process coordinate does not usually yield significant improvement compared to selecting simply the least noisy corrected variable alone. However, the overall improvement factor when comparing the least noisy segment intensity with the outcome of the multi-step analysis described above is always drastic; it is 3.5 for $ET_A$-receptor internalization assay, 4.2 for Akt3 assay and 17.4 for Transfluor assay.

**Example 5: Optimized linear combination of time-gated images**

Above, we have applied the method of the present invention to three translocation assays. In this section, we report of applying it on a series of time-gated images. We have two different kind of cellular samples and their mixtures, originally prepared for demonstration purposes of Fluorescence Lifetime Imaging (FLIM). The two kind of cells differ by lifetime of fluorescence which is 1.86 ns for positive control samples and 2.62 ns for negative control ones. However, in the approach here we do not determine lifetimes at all. We do not assume any particular decay function. We determine two specific linear combinations of input images, calculate their ratio and return this as the output image having specific properties. The properties are, first, that the output is linear in the process that transforms a fluorescence species having one decay function into another species with another decay function. Secondly, the selected linear combination has an optimal signal to noise ratio, i.e. it best distinguishes cells of positive control samples from cells of negative control ones.

The steps of analysis are as follows. First, for each sample we measure images through a series of lifetime gate times. i.e. different delay times between an excitation light pulse and an observation time interval. In the particular example, we have used four lifetime gates. Images through different lifetime gates differ, first of all, by intensity. If there are objects having different lifetimes of fluorescence then relative intensities of such objects change from one image to the other. On Fig. 28, three images from the same sample are presented that differ by the lifetime gate time. This is a sample with two kinds of cells having different mean intensities and decay functions of fluorescence.

At first we determine a mask of cells. Here we have used standard object recognition tools of Acapella software. By this, we ignore all pixels where cells are expected to be absent.

We further modify the mask by determining outlier pixels where intensity of any image in the series is deviant. After this is done for at least one positive and one negative control sample, we determine coefficients of the linear combination best representing the scalar noise factor. The resulting linear combination of the original images presented in Fig. 28 is shown in Fig. 29. As a specific property of such linear combination, expected intensities from cells of positive and negative control samples are equal. Thus, lower or higher brightness of a cell in this image indicates only a negative or positive fluctuation in the intensity of the individual cell but is unrelated to the type of the cell.

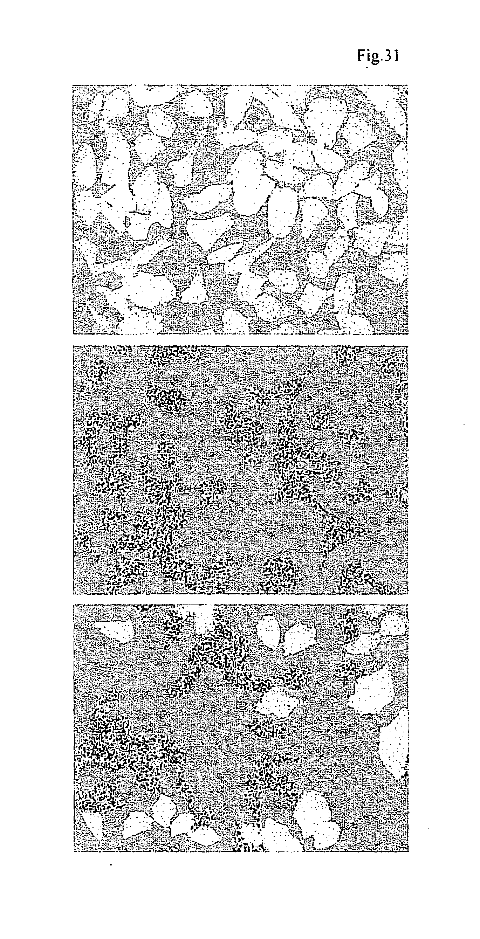

The next step is correcting original images against the scalar noise factor. The result of this step is illustrated by Fig. 30. After the correction step, we once again modify the mask removing the pixels that turn out to be deviants after the correction step. Thereafter, we determine the second set of linear coefficients that define the output image. Having found the two sets of linear coefficients, we can for each sample easily convert the set of input images into the output image, see Fig. 31. (Upper image - a positive control sample; middle image - a negative control sample; lower image - a sample with both kind of cells. The lower image corresponds to the same sample that was imaged in the previous figures.)

## Discussion

Generally, a great number of parameters can be used to quantify images of cellular assays, in particular after recognition and segmentation steps. Here we have selected a special subset for analysis, mean pixel intensities from different segments of cells. A rationale of this selection is that mean intensities provide a set of measurable variables that have a linear relationship with the general coordinate of the translocation process that cannot be directly measured.

A specific requirement of this approach is that several measurable variables are needed that are in a linear relationship with latent variables. In our three first examples we have applied mean intensities of different segments of cells from both original and filtered images. There are good chances to widen the set of measurable variables with a linear interrelationship. As demonstrated by our fourth example, our approach is applicable to raw data from lifetime gates. A related field is known as FLIM (Lakowicz J. R., H. Szmacinski, K. Nowaczyk, M. L. Johnson. 1992. Fluorescence Lifetime Imaging of free and protein-bound NADH. Proc. Natl. Acad. Sci. USA 89:1271-1275.). In our approach there is no need to apply any specific models of decay functions. We do not fit lifetime-gated data at all. The analysis is very fast and easily applicable in high throughput mode.

In the examples above, all samples are expected to lie on the straight line connecting negative and positive control samples in the space of measured variables. However, certain processes may cause an alternative path of evolution, e.g. the death of cells creates another set of cell segment intensities. If we have data from such kind of control samples available then our method can be applied to determine a linear combination distinguishing live and dead cells.

## TABLES

Table 1. Linear coefficients for Akt3 assay

| Image | Variable | Coefficient in the reference intensity | Coefficient in the estimator of the process coordinate |
|---|---|---|---|
| Original | Membrane intensity | 0.00274 | 0.0248 |
| | Outer-cytoplasm intensity | -0.00497 | -0,0457 |
| | Inner-cytoplasm intensity | 0.00921 | 0,0178 |
| Filtered | Membrane intensity | | 0.0112 |
| | Outer-cytoplasm intensity | | 0.0771 |
| | Inner-cytoplasm intensity | | -0.0041 |

Table 2. Linear coefficients for $ET_A$-Receptor Internalisation Assay.

| Image | Variable | Coefficient in the reference intensity | Coefficient in the estimator of the process coordinate |
|---|---|---|---|
| Original | Outer-cytoplasm intensity | 0.00165 | -0.00291 |
| | Mid-cytoplasm intensity | -0.00064 | -0.00011 |
| | Inner-cytoplasm intensity | 0.00031 | 0.00328 |
| | Nucleus intensity | 0.00074 | -0.00021 |

Table 3. Linear coefficients for Transfluor assay.

| Image | Variable | Coefficient in the reference intensity | Coefficient in the estimator of the process coordinate |
|---|---|---|---|
| Original | Outer-cytoplasm intensity | 0.00356 | -0.00125 |
| | Inner-cytoplasm intensity | 0.00017 | 0.00000 |
| | Nucleus intensity | -0.00050 | 0.00073 |
| Filtered | Outer-cytoplasm intensity | | 0.00983 |
| | Tnner-cytoplasm intensity | | 0.00095 |
| | Nucleus intensity | | -0.00225 |

## Claims

1. Method for quantifying an underlying property of a multitude of biological samples, having the steps:

   - providing a multitude of samples, each sample **characterised by** said underlying property, comprising at least two different groups of control samples, whereby the underlying property is known to be of identical value within each control group,
   - taking at least one image of each sample,
   - performing image analysis of said images to obtain at least two measures for each sample, whereby said measures are expected to have a linear relation to the underlying property and to be affected by a scalar multiplicative noise factor,
   - determining coefficients of a first linear combination of said measures, satisfying the conditions

     o for each of the control groups, the expected value of the first linear combination equals a first predefined non-null constant and
     o for all or a subset of the samples, the variance of said first linear combination is minimised

   - deriving normalised measures by dividing each measure for each sample by said first linear combination of said measures for said sample, and
   - quantifying the underlying property for all or a subset of the samples using one or more of the normalised measures.

2. Method according to claim 1, where said groups of control samples are representing two extreme values of the underlying property.

3. Method according to claim 1 or 2, wherein the subset of samples used in the step of reducing the variance includes one or more of said groups of control samples.

4. Method according to any of claims 1 to 3, wherein said coefficients are determined by solving a set of linear equations representing said conditions.

5. Method according to any of claims 1 to 4, wherein the underlying property is quantified using a second linear combination of said normalised measures.

**6.** Method according to claim 5, wherein coefficients of said second linear combination of said normalised measures are determined by satisfying the conditions

- for two of the control groups, the expected value of the second linear combination differs by a second predefined non-null constant and
- for all or a subset of the samples, the variance of said second linear combination is minimised.

**7.** Method according to claim 6, wherein the subset of samples used in the step of reducing the noise of said second linear combination includes one or more of said groups of control samples.

**8.** Method according to any of the preceding claims, wherein the biological samples are cells, tissues, or substrates carrying biological molecules.

**9.** Method according to claim 8, wherein the underlying property characterises the state of a specific biological process.

**10.** Method according to claim 8 or 9, wherein said groups of control samples are prepared via treatment known to induce certain biological processes leading to specific values, preferably high or low values, of the underlying property.

**11.** Method according to any of the preceding claims, wherein the at least one image of each sample comprises a microscopic image, fluorescent image(s) in one or multiple wavelength bands, time-gated fluorescence images for one or multiple delay times between fluorescence excitation and emission and/or scattered light image(s).

**12.** Method according to any of the preceding claims, wherein the image analysis comprises filtering, binarisation, object recognition and/or segmentation.

**13.** Method according to claim 12, wherein the measures comprise average or integrated intensities, geometrical parameters and/or texture parameters of objects or segments in one or multiple image(s) per sample.

**14.** Method according to any of the preceding claims, wherein the linear relation between said measures and said underlying property is verified by

- inspecting the relation between pairs of measures, and/or
- inspecting the relation between a measure and the estimated underlying property.

**Patentansprüche**

**1.** Verfahren zur Quantifizierung einer zugrundeliegenden Eigenschaft einer Vielzahl von Proben, mit den folgenden Schritten:

- Bereitstellen einer Vielzahl von Proben, wobei jede Probe durch die zugrundeliegende Eigenschaft **gekennzeichnet** ist, mit mindestens zwei Gruppen von Kontrollproben, wobei bekannt ist, dass die zugrundeliegende Eigenschaft in jeder Kontrollgruppe einen identischen Wert hat,
- Erstellen mindestens einer Abbildung von jeder Probe,
- Durchführen einer Bildanalyse der Abbildungen, um mindestens zwei Messwerte für jede Probe zu erhalten, wobei erwartet wird, dass die Messwerte eine lineare Beziehung zu der zugrundeliegenden Eigenschaft aufweisen und von einem skalar-multiplikativen Rauschfaktor beeinflusst sind,
- Bestimmen von Koeffizienten einer ersten linearen Kombination der Messwerten, welche die folgenden Bedingungen erfüllt

  • für jede der Kontrollgruppen ist der erwartete Wert der ersten linearen Kombination gleich einer ersten vordefinierten von Null verschiedenen Konstante, und
  • für sämtliche oder eine Untergruppe der Proben ist die Varianz der ersten linearen Kombination minimiert,

- Ableiten von normalisierten Messwerten durch Dividieren jedes Messwerts für jede Probe durch die erste lineare Kombination der Messwerte für die Probe, und
- Quantifizieren der zugrundeliegenden Eigenschaft für sämtliche oder eine Untergruppe der Proben unter Verwendung eines oder mehrerer der normalisierten Messwerte.

**2.** Verfahren nach Anspruch 1, bei welchem die Gruppen von Kontrollproben zwei Extremwerte der zugrundeliegenden Eigenschaft repräsentieren.

**3.** Verfahren nach Anspruch 1 oder 2, bei welchem die im Schritt des Verringerns der Varianz verwendete Untergruppe von Proben eine oder mehrere der Kontrollprobengruppen aufweist.

**4.** Verfahren nach einem der Ansprüche 1 bis 3, bei welchem die Koeffizienten durch Lösen einer Gruppe linearer Gleichungen, welche die genannten Bedingungen wiedergeben, ermittelt werden.

**5.** Verfahren nach einem der Ansprüche 1 bis 4, bei welchem die zugrundeliegende Eigenschaft unter Verwendung einer zweiten linearen Kombination der normalisierten Messwerte quantifiziert wird.

**6.** Verfahren nach Anspruch 5, bei welchem Koeffizienten der zweiten linearen Kombination der normalisierten Messwerte durch Erfüllen der folgenden Bedingungen bestimmt werden:

- für zwei der Kontrollgruppen weicht der erwartete Wert der zweiten linearen Kombination um eine zweite von Null verschiedene vordefinierte Konstante ab, und
- für sämtliche oder eine Untergruppe der Proben ist die Varianz der zweiten linearen Kombination minimiert.

**7.** Verfahren nach Anspruch 6, bei welchem die in dem Schritt der Rauschverringerung der zweiten linearen Kombination verwendete Probenuntergruppe eine oder mehrere der Kontrollprobengruppen aufweist.

**8.** Verfahren nach einem der vorhergehenden Ansprüche, bei welchem die biologischen Proben Zellen, Gewebe oder biologische Moleküle tragende Substrate sind.

**9.** Verfahren nach Anspruch 8, bei welchem die zugrundeliegende Eigenschaft den Zustand eines bestimmten biologischen Prozesses kennzeichnet.

**10.** Verfahren nach Anspruch 8 oder 9, bei welchem die Kontrollprobengruppen durch eine Behandlung erstellt werden, welche bekanntermaßen bestimmte biologische Prozesse induziert, welche zu spezifischen Werten, vorzugsweise hohen oder niedrigen Werten, der zugrundeliegenden Eigenschaft führen.

**11.** Verfahren nach einem der vorhergehenden Ansprüche, bei welchem die mindestens eine Abbildung jeder Probe eine mikroskopische Abbildung, eine fluoreszente Abbildung(en) in einem oder mehreren Wellenlängenbändern, zeitlich selektierte Fluoreszenzabbildungen für eine oder mehrere Verzögerungszeiten zwischen der Fluoreszenzerregung und -emission, und/oder eine Streulichtabbildung(en) aufweist.

**12.** Verfahren nach einem der vorhergehenden Ansprüche, bei welchem die Analyse Filtern, Binarisierung, Objekterkennung und/oder Segmentierung aufweist.

**13.** Verfahren nach Anspruch 12, bei welchem die Messwerte durchschnittliche oder integrierte Intensitäten, geometrische Parameter und/oder Texturparameter von Objekten oder Segmenten in einem oder mehreren Bildern pro Probe aufweisen.

**14.** Verfahren nach einem der vorhergehenden Ansprüche, bei welchem die lineare Beziehung zwischen den Messwerten und der zugrundeliegenden Eigenschaft überprüft wird durch

- das Untersuchen der Beziehung zwischen Paaren von Messwerten, und/oder
- Untersuchen der Beziehung zwischen einem Messwert und der geschätzten zugrundeliegenden Eigenschaft.

## Revendications

**1.** Procédé de quantification d'une propriété intérieure de plusieurs échantillons biologiques, comprenant les étapes suivantes:

- prévoir plusieurs échantillons, chaque échantillon étant **caractérisé par** ladite propriété intérieure, comprenant au moins deux groupes différents d'échantillons de contrôle, ladite qualité intérieure étant connue d'avoir une valeur identique dans chaque groupe de contrôle,
- prendre au moins une image de chaque échantillon,
- exécuter une analyse d'image desdites images pour obtenir au moins deux valeurs mesurées pour chaque échantillon, lesdites valeurs mesurées étant attendues d'avoir une relation linéaire avec ladite propriété intérieure et d'être affectée par un facteur de bruit scalaire multiplicatif,
- déterminer des coefficients d'une première combinaison linéaire des valeurs mesurées, satisfaisant aux conditions suivantes

• pour chaque groupe de contrôle, la valeur attendue de la première combinaison linéaire est égale à une première constante prédéfinie non zéro, et
• pour chaque échantillon ou un sous-groupe des échantillons, la variance de ladite première combinaison est minimalisée,

- dériver des valeurs mesurées par divisant chaque valeur mesurée de chaque échantillon par une première combinaison linéaire desdites valeurs mesurées de cet échantillon, et
- quantifier ladite propriété intérieure pour chaque échantillon ou un sous-groupe des échantillons utilisant une ou plusieurs des valeurs mesurées normalisées.

**2.** Procédé selon la revendication 1, dans lequel les groupes des échantillons de contrôle représentent deux valeurs extrêmes de ladite propriété intérieure.

**3.** Procédé selon la revendication 1 ou 2, dans lequel ledit sous-groupe des échantillons utilisé dans ladite étape de réduction de la variance comprend un ou plusieurs des groupes des échantillons de contrôle.

**4.** Procédé selon l'une quelconque des revendications 1 à 3, dans lequel lesdits coefficients sont déterminés par la résolution d'un groupe d'équations linéaires représentant lesdites conditions.

**5.** Procédé selon l'une quelconque des revendications 1 à 4, dans lequel ladite propriété intérieure est quantifiée en utilisant une deuxième combinaison linéaire desdites valeurs mesurées normalisées.

**6.** Procédé selon la revendication 5, dans lequel des coefficients de ladite deuxième combinaison linéaire des valeurs mesurées normalisées sont déterminés par satisfaisant aux conditions que

- pour deux groupes de contrôle, la valeur attendue de ladite deuxième combinaison linéaire diffère par une deuxième constante prédéfinie non-zéro, et
- pour chaque échantillon ou un sous-groupe des échantillons, la variance de ladite deuxième combinaison linéaire est minimalisée.

**7.** Procédé selon la revendication 6, dans lequel le sous-groupe des échantillons utilisé dans l'étape de réduction de bruit de ladite deuxième combinaison linéaire comprend un ou plusieurs desdits groupes des échantillons de contrôle.

**8.** Procédé selon l'une quelconque des revendications précédentes, dans lequel les échantillons biologiques sont des cellules, des tissus, ou des substrats portant des molécules biologiques.

**9.** Procédé selon la revendication 8, dans lequel la propriété intérieure caractérise l'état d'un processus biologique spécifique.

**10.** Procédé selon la revendication 8 ou 9, dans lequel lesdits groupes des échantillons de contrôle sont préparés par un traitement dont il est connu qu'il induit certains processus biologiques résultant en des valeurs spécifiques, de préférence des valeurs hautes ou basses, de ladite propriété intérieure.

**11.** Procédé selon l'une quelconque des revendications précédentes, dans lequel ladite au moins une image de chaque échantillon comprend une image microscopique, une (des) image(s) fluorescente(s) dans une ou plusieurs bandes de longueur d'onde, des images de fluorescence choisies dans le temps pour un ou plusieurs temps de délai entre l'excitation de fluorescence et l'émission et/ou des images de lumière diffusée.

**12.** Procédé selon l'une quelconque des revendications précédentes, dans lequel l'analyse d'image comprend la filtration, la binairisation, la recognition d'objets et/ou la segmentation.

**13.** Procédé selon la revendication 12, dans lequel les valeurs mesurées comprennent des intensités moyennes ou intégrées, des paramètres géométriques et/ des paramètres de texture d'objets or segments dans une ou plusieurs images per échantillon.

**14.** Procédé selon l'une quelconque des revendications précédentes, dans lequel ladite relation linéaire entre lesdites valeurs mesurées et ladite propriété intérieure est vérifiée par

- l'inspection de la relation entre des paires de valeurs mesurées, et/ou
- l'inspection de la relation entre une valeur de mesure et ladite propriété intérieure estimée.

Fig. 1

Fig. 2

Fig. 3

Fig. 4

Outer-cytoplasm intensity
130
125
120
115
110
105
Wortmannin
Ly294002
70
80
90
100
110
120
130
140
150
Membrane intensity

Fig. 5

Mean intensity of a segment
150
140
130
120
110
100
90
80
70
-0.2
0 0
0 2
0 4
0 6
0 8
1.0
1 2
Estimate of the process coordinate
Membrane
Outer-cytoplasm
Inner-cytoplasm

Fig. 6

Original
membrane intensity
400
300
200
100
0
Corrected
membrane intensity
400
300
200
100
0
0
2000
4000
6000
8000
10000
12000
Cells

Fig. 7

Fig. 8

Membrane intensity of the filtered image
0
2
4
6
8
10
12
14
16
18
20
22
70
80
90
100
110
120
130
140
150
Membrane intensity of the original image

Fig 9

160
140
120
100
80
60
20
0
Mean intensity of a segment
Membrane
Outer-cytoplasm
Inner-cytoplasm
-0 2
0 0
0 2
0 4
0 6
0 8
1 0
1 2
Estimate of the process coordinate

Fig. 10

250
200
150
100
20
10
0
Mean intensity
Positive control
Negative control
0
5
10
15
20
Zone number

Fig. 11

Fig. 12

Membrane intensity
800
600
400
200
0
Outer-cytoplasm intensity
800
600
400
200
0
Inner-cytoplasm intensity
800
600
400
200
0
0
2000
4000
6000
8000
10000
12000
Cells

Fig. 13

Membrane intensity
400
300
200
100
0
Outer-cytoplasm intensity
300
250
200
150
100
50
0
Inner-cytoplasm intensity
200
180
160
140
120
100
80
0
2000
4000
6000
8000
10000
12000
Cells

Fig. 14

Estimate of
the process coordinate
6
4
2
0
-2
-4
0
2000
4000
6000
8000
10000
12000
Cells

Fig. 15

1 2
1 0
0 8
0 6
0 4
0 2
0 0
-0 2
1
10
100
1000
Estimate of
the process coordinate
Wortmannin concentration, nM

Fig. 16

Positive control
Negative control
Intensity
Zone number
1000
800
600
400
200
0
0
5
10
15
20

Fig. 18

Outer-cytoplasm intensity
3000
2500
2000
1500
1000
500
0
Mid-cytoplasm intensity
4000
3000
2000
1000
0
Inner-cytoplasm intensity
4000
3000
2000
1000
0
Nucleus intensity
3000
2500
2000
1500
1000
500
0
0 2000 4000 6000 8000 10000 12000
Cells

Fig. 19

Outer-cytoplasm intensity
800
600
400
200
0
Mid-cytoplasm intensity
1200
1000
800
600
400
200
0
Inner-cytoplasm intensity
2000
1500
1000
500
0
Nucleus intensity
1000
800
600
400
200
0
0
2000
4000
6000
8000
10000
Cells

Fig. 20

Estimated process coordinate
5
4
3
2
1
0
-1
-2
0
2000
4000
6000
8000
10000
Cells

Fig. 21

Estimated process coordinate
1 2
1 0
0 8
0 6
0 4
0 2
0 0
-0 2
0
10
20
30
Wells
Positive control
Negative control

Fig. 22

1200
1000
800
600
400
200
0
Intensity
0
5
10
15
20
Zone number
Positive control
Negative control

Fig. 23

Fig. 24

Intensities
of the original image
Intensities
of the filtered image
Outer-cytoplasm intensity
Inner-cytoplasm intensity
Nucleus intensity
2000
1500
1000
500
0
600
400
200
0
3500
3000
2500
2000
1500
1000
500
0
1000
500
0
3500
3000
2500
2000
1500
1000
500
0
800
600
400
200
0
0
500
1000
1500
Cells
0
500
1000
1500
Cells

Fig. 25

Corrected intensities of the original image
Corrected intensities of the filtered image
Outer-cytoplasm Intensity
Inner-cytoplasm Intensity
Nucleus Intensity
550
500
450
400
350
300
250
200
150
100
50
0
2000
1500
1000
500
1200
800
600
400
1400
Cells
Cells

Fig.26

Estimated
process coordinate
2 0
1 5
1 0
0 5
0 0
-0 5
0
200
400
600
800
1000
1200
1400
1600
Cells

Fig. 27

Improvement factor
18
16
10
8
6
4
2
0
Akt3
$ETA_R$
Transfluor
FLIM
Outlier-filtering 1
Correction
Outlier-filtering 2
Optimization
Image filtering
Overall

Fig. 28

Fig. 29

Fig.30

Fig.31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **HYVÄRINEN, A.** Survey on Independent Component Analysis. *Neural Computing Surveys,* 1999, vol. 2, 94-128
- **HYVÄRINEN, A. ; E. OJA.** A fast fixed-point algorithm for independent component analysis. *Neural Computation,* 1997, vol. 9, 1483-1492
- **HYVÄRINEN, A. ; E. OJA.** Independent component analysis: algorithms and applications. *Neural Networks,* 2000, vol. 13, 411-430
- **LAKOWICZ J. R. ; H. SZMACINSKI ; K. NOWACZYK ; M. L. JOHNSON.** Fluorescence Lifetime Imaging of free and protein-bound NADH. *Proc. Natl. Acad. Sci. USA,* 1992, vol. 89, 1271-1275